# EUROPEAN PATENT SPECIFICATION

(11) **EP 1 431 079 B1**
(45) Date of publication and mention of the grant of the patent: **21.11.2007**
(21) Application number: 03016456.0
(22) Date of filing: 22.07.2003
(51) Int. Cl.: B60C 23/00, B60C 23/04

(54) **System for transmitting a signal indicating the functioning condition of a tire**
System zur Übertragung eines Signals, das den Betriebzustand eines Luftreifens anzeigt
Système pour la transmission d'un signal indicatif de la condition de fonctionnement d'un pneumatique

(30) Priority: 16.12.2002 IT BO20020789
(43) Date of publication of application: 23.06.2004
(73) Proprietor: Barbanti, Giovanni, 40033 Casalecchio di Reno (IT)
(72) Inventor: Barbanti, Giovanni, 40033 Casalecchio di Reno (IT)
(74) Representative: Rinaldi, Carlo

(56) References cited:
- EP-A- 0 893 284
- EP-A- 0 979 743
- US-A- 5 040 562
- US-A- 5 513 524
- US-A- 5 604 481

## Description

### BACKGROUND OF THE INVENTION

The present invention relates to a system capable of transmitting a signal representing the functioning condition of a tire to a receiver founding aboard a vehicle. In particular, the invention discloses a system capable of transmitting a signal representing the exceeding, by the difference between the internal pressure of the tire and the atmospheric pressure, a pre-established threshold value. Therefore, this signal represents also the radial deformation of the tire. In fact, the radial deformation of the tire, for a given load, is proportional to the difference in pressure.

### PRIOR ART

Systems for surveying and signalling the internal pressure of a tire are known from the current technique. Eventually, the systems are also used for sensing and signalling a temperature between the temperature of the gas inside the tire and the temperature of other members of the group of the wheel, to which the temperature sensor is near or connected. In general, the reference pressure of the pressure sensor has a fixed value.

These sensors, in general electronically-controlled, are located outside or, more often, inside the tire, and are connected to apparatuses processing the data and transmitting them to an external receiver.

The systems usually comprise an apparatus supplied to each tire to measure the pressure, eventually considering also the temperature inside the tire. The apparatus is also used for processing the data sensed by the sensors and for transmitting the data to an external receiver. This receiver is connected to a processing central unit that in its turn transmits a signal to the display device usually located on the vehicle cluster. The transmission of the signal from the apparatus of each tire to the external receiver occurs by means at least one transmitting and one receiving antenna. These systems also comprise at least one harness.

The functioning of said systems requires a considerable quantity of energy. The apparatus measuring the pressure and the temperature of each tire is, therefore, feed or with batteries or alternators or dynamo.

Document US-A-5,604,481 discloses a system for surveying the pressure of a tire showing the features of the preamble of claim 1

The typical problems of these systems are mainly as follows:
1. the systems do not function if they are not feed;
2. the systems continuously consume energy for functioning;
3. to save energy, the systems are acted during limited periods only. Therefore the transmission of the signal undergoes delays with respect to the occurring of the event to be sensed;
4. the information given by said systems needs a following processing by means of suitable devices to be at disposal of the addresses;
5. in general, the signals of the sensors are analogue, that is they are represented by the variation of quantities different from the ones to be sensed; therefore they need a conversion and a digitisation;
6. the signals successively need to be processed for interpreting their meaning;
7. all said operations on signals cause a decreasing in the precision, reliability and reproducibility;
8. the complexity of the systems is high, with a high number of components, with consequent cost-push, excessive dimensions and masses;
9. the physic feature of the data sensed does not allow to have information about the state of radial deformation of the tire, which is the most important parameter to value the functioning state of a tire.

### AIMS AND FEATURES OF THE INVENTION

The purpose of the invention is to remove these disadvantages. The invention, as claimed, solves the problem of creating a s ystem for transmitting a signal indicating the functioning condition of a tire.

By using the invention the result of transmitting to the driver of a vehicle a warning signal is obtained, when the state of radial deformation of the tire exceeds a pre-established threshold.

This result is due to the co-operation of the present invention with a device as that disclosed in EP 0 893 284 and other pending patent documents.

The advantages offered by the invention are mainly as follows:
1. the function of the system is only to transmit a signal when the state of radial deformation of the tire exceeds a pre-established threshold;
2. the system is activated from outside by a switch to emit the signal;
3. the signal to be transmitted is on/off, therefore it is easy to obtain, process, transmit and interpret according any kind of codex or protocol;
4. the feature of point 3 allows the use of a central unit aboard the vehicle as receiver of the signal, for example the unit tele-controlling the opening of the doors;
5. the locating of the wheel sending the signal by the receiver through a simple processing that does need previously and strictly associate a specific apparatus to the wheel equipped with said apparatus;
6. because of the function of point 5, it is possible to maintain the full functioning of the system, also after inversions of the position of replacing of the single wheels of the vehicle.

The system according to the present invention is defined in claim 1.

Advantageously, the receiver is located aboard the vehicle.

The signalling device is fitted with a first member for feeding energy for sending a warning signal.

The signalling device further comprises a second member for feeding energy for carrying out the processing functions inside the device.

The apparatus sends a signal indicating the charge condition of the electric generators.

A first processing function of the apparatus consists in the transmission, at pre-established time periods, of signals indicating the own proper functioning condition.

In order to save energy, the transmission of the signal of the proper functioning condition of the apparatus, at pre-established time periods, is not enabled when the group commutes the switch.

In order to identify the tire in failure and to limit the probability to receive signals from the devices out of the own vehicle, every single apparatus uses an own identifying code.

The apparatus comprises a receiver, which carries out a self-learning function to associate every single apparatus to the tire on which the apparatus is mounted. For this purpose the receiver associates the codes received according to the pre-fixed sequence to the pre-established position of any single wheel and it identifies the loading sequence.

The signal of right functioning, sent during the first loading, is used by the receiver for self-learning the position of every single tire relating every single installed apparatus. It is, in fact, sufficient to follow a pre-established loading sequence of the mounted devices, the total number of which is equal to the number of wheels of the vehicle, eventually including the spare wheels.

In order to associate every single apparatus to every single tire, a pre-established activation sequence is used; the first received code is associated to a first wheel, the second code to a second wheel, etc until the wheel n, being n the total number of wheels to be controlled.

In order to save energy, a movement sensor of the wheel is further provided in the apparatus, said sensor co-operating to prevent the transmission of the signal of the right functioning of the apparatus sent at pre-established time periods when the vehicle is stationary.

The apparatus is fitted with an autonomous generator of electricity formed by a winding linked to a magnetic field.

The apparatus is fitted with an autonomous generator of electricity formed by a winding linked to a magnetic field consisting of a magnet fixed on the structure of the vehicle near the wheel.

The apparatus is fitted with a receiving circuit in order to obtain a bi-directional transmitting system capable of limiting the feeding of energy just when the vehicle is running.

### BRIEF DESCRIPTION OF THE DRAWINGS

Other advantages, features and aims of the invention, may be more readily understood by referring to the accompanying drawings, which concern a preferred embodiment, in which:
Fig 1 represents an longitudinal section of a device for sensing and signalling the state of radial deformation of a loaded tire co-operating with a system according to the present invention;
Fig 2 represents the device of Fig 1 wherein a switch is in contact with a plate, when the device is unloaded or during the loading phase.
Fig 3 is a block figure showing the functioning of a system of transmission of the signal according to the invention.

### DESCRIPTION OF A PREFERRED EMBODIMENT OF THE INVENTION

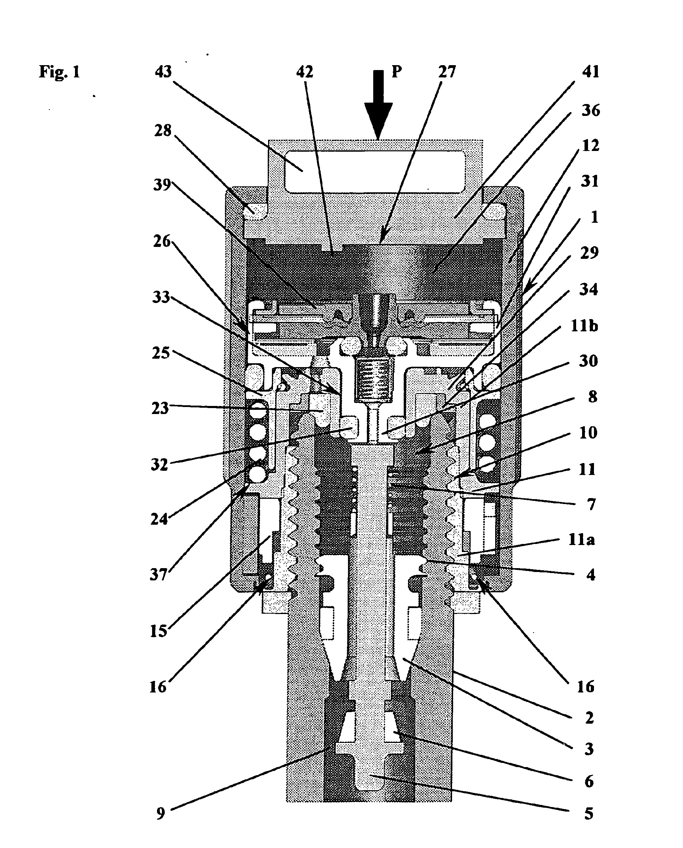

Fig 1 represents a device (1) for sensing and signalling the state of radial deformation of a loaded tire, mounted on an usual tire inflating valve. Said valve substantially consists of a metal tube (2) housing a body (3) fixed, in its turn, inside through a threaded sealing connection (4). A self-closing member (5) axially slides inside the threaded connection (4). A sealing gasket (6) is held in the closing position by a spring (7). The self-closing member (5) is capable of automatically opening, when the pressure, in its part faced towards the outside, that is in the chamber (8), multiplied by the effective surface of the sealing gasket (6) generates on the self-closing member (5) a downwards axial force, is higher than the one due to the pressure existing in its part faced outside, that is in the chamber (9), or inside the tire, multiplied by the effective surface of the sealing gasket (6) added by the force of the spring (7). Vice-versa, for maintaining closed if the force due to the pressure in the part faced towards the outside (chamber (8)) is lower than the one due to the pressure existing in the tire (chamber (9)) by the force of the spring (7). Obviously, the self-closing member (5) is also open by a mechanical action from outside, by applying a force at its end, in inward direction as shown in Fig 1.

The device (1) is screwed on the valve replacing the usual protecting cap. The device (1) and a good part of its internal member have an axial symmetric shape. The device (1) comprises a threaded body (11) consisting of two parts (11a and 11b) welded each other; the threaded body (11) engages the threaded end (10) of the tire inflating valve. An external envelope (12) is connected to the threaded body (11).

A sealing gasket (23) seals the chamber (8) and prevents undesired gas leaks when the device (1) is loaded.

The loading phase of the device (1) consists in applying an axial push P on the envelope (12) of Fig 1, having module higher than the upwards push due to a spring (24). The spring (24) is located between the threaded body (11) and a centring sleeve (25), by means of which the spring (24) pushes upwards the group sensor/amplifier/transducer /actuator (26). Said group is unloaded during a time foregoing the screwing and clamping manoeuvre of the device (1) on the valve. Therefore the group rests on the wall (27) of a box (41) housing the system according to the present invention, wherein the box (41) is found at the opposite end of the threaded body (11) and is sealing stiffly connected to the envelope (12). The sealing is due to a gasket (28) located between the end of the envelope (12) and an abutting founding on the box (41).

A switch (42) extends from the wall (27) towards the chamber (36) for contacting a plate (39), which is a part of the group (26), when said group (26) is unloaded or during the loading phase. Therefore, in these conditions the switch (42) is in the state opposite to the one that it has when the device is loaded.

When the axial push P on the envelope (12) has a module higher than the upwards push due to the spring (24), the envelope (12) slides towards the valve (2). Contemporaneously the envelope (12) causes a push transmitting from the wall (27) to the group sensor/amplifier/transducer/actuator (26), which, in its turn, compresses the spring (24).

The push of the wall (27) on the group (26) causes the translation of the group (26) towards the upper wall (29) of the threaded body (11) until the abutting. During the descent, the lower end (30) of the housing (31) of the group (26) pushes the self-closing member (5) inwardly the valve (2) against the spring (7) and the push due to the pressure of the gas in the tire on the effective section of the gasket (6), and connects the chamber (9), joined to the inside of the tire, with the chamber (8), delimited by the end (10) of the valve (2), the upper wall (29) of the threaded body (11), the gasket (23) and by a gasket (32), which seals the lower end (30) of the housing (31) of the group (26) with the cylindrical hollow (33) founding in the upper wall (29) of the threaded body (11).

The gasket (6) is open until the group (26) is displaced towards the threaded body (11), that it is loaded, and automatically closes when the group (26) is far from the threaded body (11).

Apparatuses are housed inside the group (26) which are capable of carrying out the functions of measuring, amplifying and converting the signal coming from the difference between the pressure of the gas inside the tire and the atmospheric pressure, the apparatuses further indicating the pressure exceeding the pre-established threshold. Said apparatuses are technically equivalent to those described in EP-A-0 893 284; for this reason, the features of those apparatuses may be more readily understood by referring to this document.

An annular gasket (35) separates the chamber (36), located between the wall (27) and the group, from the chamber (37), situated between the centring sleeve (25) and the external environment. The chamber (37) is connected to the external environment through a hole (not shown) at the basis of the threaded body (11). This gasket (35) co-operates with the spring (24) for obtaining the same function of the bellows ofEP-A- 0 893 284.

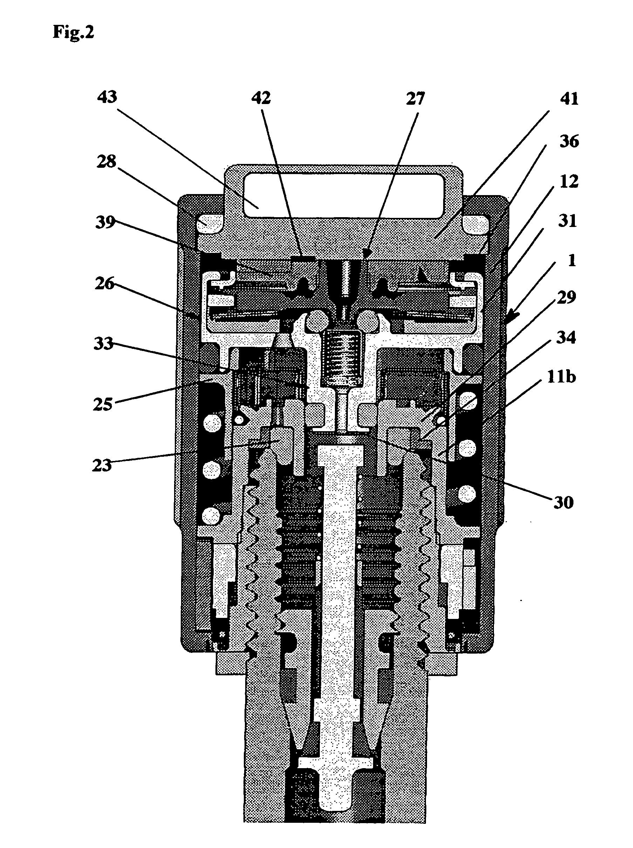

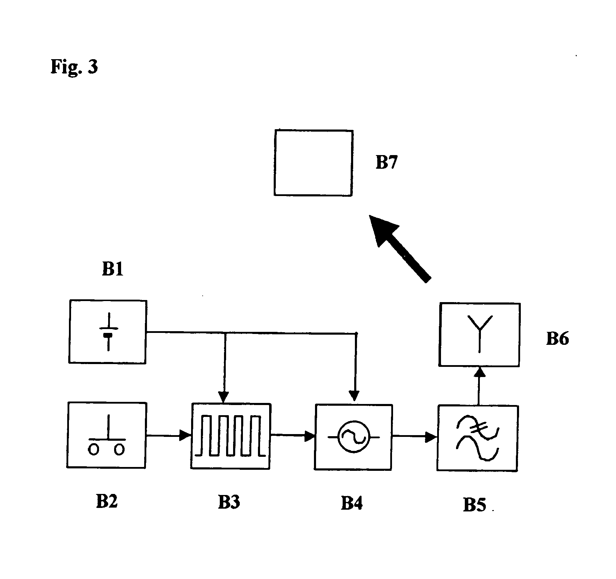

The circuit of Fig 3 is provided inside the box (41). This circuit comprises a generator of electrical energy (B1) (43 in Figs 1, 2), connected to a code generator with output PWM (B3), and to an oscillator (B4) capable of generating the right frequency for transmitting the coded signal. A switch (B2) (42 in Figs 1, 2) enables the circuit to transmit the signal when the switch (42) changes over. The signal is successively filtered by the filter (B5), emitted through the antenna (B6) and picked up by a receiver (B7) aboard the vehicle.

Since the signal generated by the group (26) of Fig 1 is already defined in accordance to the event to be signalled, which is the exceeding of a pre-established threshold of the tire radial deformation, the emission of a simple train of signals without any added information should be sufficient. But a so simple signal is insufficient to identifying the tire in failure, and in the case of proximity of more vehicles fitted with the device, it can be the cause of uncertainty. In fact an adjacent vehicle can receive the signal emitted by the device supplied to the tire of a vehicle. For identifying the tire in failure and decrease the probability of receiving signals from devices not related to own vehicle, a more complex code is necessary, which is typical of the single device. The code generator with output PWM (B3) generates this code.

Further functions obtained by means of codes generated by the code generator (B3) consist of a code indicating the condition of electric charge of the generator of electrical energy and a code, transmittable with pre-established intervals of time, indicating the right condition of the circuit.

In order to the receiver (B7) immediately identifies the tire in failure, it is necessary to follow a standard to associate the identifying code of the single device supplied to each tire to the position of the tire on the vehicle.

In the normal storage conditions, and however before the first assembly on the destination vehicle, the system is found in stand by conditions: the feeding is connected but no signal is sent.

Once the installation is carried out to the first loading, the commutation of switch (42, B2) activates the normal function in which the system is limited to emit the self-control signal of correct condition at the previewed cadence: such normal function will come then maintained for all the duration of loading state of the device.

The signal emitted at the moment of the first loading is used by the receiver (B7) for self learning of the position of each single tire relative to each single sensor installed without the necessity of pre-memorising codes on the receiver. It is sufficient to follow a prefixed loading sequence of the mounted devices, the total number of which will be equal to the number of wheels of the vehicle, eventually comprised the spare wheels. The receiver associates the received codes according to the pre-established sequence to the prefixed position of the single wheels. For example, the first code received is associated to the left front wheel, the second to the front right wheel, etc until the wheel n, wherein n is the total number of wheels to be controlled. That avoids a prefixed correspondence between the code that the device is capable of transmitting and the single tire.

The choice of the described procedure does not require a fixed correspondence between the code of the device and the single tire. Therefore, it allows, both at the first mounting and in any moment of use of the vehicle, to change the disposition of the devices on the n wheels in any casual way and for any reason without losing the possibility of identification. For example, in case of puncture of the left front wheel, the driver takes care of replacing it with the spare wheel, even if it is not equipped with the device. It is sufficient to unscrew the device of the punctured wheel and mount it on the spare wheel (now mounted in place of the left front wheel) and re-load it: the receiver (B7) recognises the emitted signal as associated to the left front. The same occurs for temporary assembly of snow tires, etc or replacement of the train tires.

In this way it is possible to eliminate all the particular formalities for starting or returning of use or for initialise or adjusting after any operation and/or unloading of one or more devices in any case.

In a not shown embodiment, the device is fitted with a receiving circuit, in order to obtain a bi-directional transmission system for limiting the energy consumption just when the vehicle is effectively used.

It is possible to act the functions of the devices just when the vehicle is used since an information about the using or stopping condition of the vehicle is transmitted to the devices supplied to each tire.

In a further not shown embodiment, the device is fitted with an inertial sensor capable of identifying the motion or rest condition of the vehicle. In this case, it is possible to act the functions of the devices only when the vehicle is moving.

In a further not shown embodiment, the device is fitted with a self-generator of electricity consisting of a winding linked to a magnetic field. The rotation of the device during the movement of the wheel induces an electromotive force in the winding, said force being used by the device or by a battery provided in the device. Known means are provided to allow a proper charge of the battery.

Advantageously, the linked magnetic field is generated by a magnet fixed on the structure of the vehicle near the wheel. Or, the magnetic field is terrestrial.

## Claims

1. A system for transmitting a signal indicating the functioning condition of a tire,
the system co-operating with a device signalling the inflating condition of the tire, while a movable group (26) is in a first loading position when the tire pressure is higher than a pre-established value,
the movable group (26) being, on the contrary, in a second unloading position when the tire pressure is lower than the pre-established value and, therefore, the tire is not suitable for a standard use,
the movable group (26) consisting of, at least, a sensor, an amplifier, a transducer and an actuator,
the system being **characterized by** the fact that a switch (42, B2) is provided commuting from a first to a second condition, which is opposite to the first one, when the movable group (26) passes from the first loading position to the second unloading position for activating a circuit sending a warning signal picked up by a receiver (B7),
an electric circuit is also provided which comprises a code generator (B3), an oscillator (B4) capable of generating the right frequency for transmitting the coded signal, a switch (B2, 42) enabling the electric circuit to transmit the signal when the switch (B2,42) changes over, a filter (B5) for filtering the signal, an antenna (B6) for transmitting the signal and a generator of electrical energy (B1) feeding all the member of the circuit.

2. A system as in claim 1, wherein the receiver (B7) is located aboard the vehicle.

3. A system as in claim 1, wherein the signalling device is fitted with a second generator of electrical energy for sending a warning signal.

4. A system as in claim 1, wherein the signalling device further comprises a third generator of electrical energy for carrying out the processing functions inside the device.

5. A system as in claim 1, wherein the apparatus sending a warning signal picked up by the receiver (B7) sends a signal indicating the charge condition of the electric generators.

6. A system as in claim 1, wherein a first processing function of the circuit consists in the transmission, at pre-established time periods, of signals indicating the own proper functioning condition.

7. A system as in claim 1, wherein the switch (42,B2) enables the circuit to transmit the signal when the group (26) commutes the switch (42,B2).

8. A system as in claim 7, wherein the transmission of the signal indicating the proper functioning condition of the circuit occurs at pre-established time periods;
∞ in order to save energy, the transmission is not enabled when the group (26) passes from the first loading position to the second unloading position and commutes the switch (42, B2) from the first to the second condition, opposite to the first one.

9. A system as in claim 1, wherein every single circuit uses an own identifying code in order to identify the tire in failure and to limit the probability to receive signals from the devices out of the own vehicle.

10. A system as in claim 1, wherein said system comprises the receiver (B7);
∞ the receiver (B7) carrying out a self-learning function to associate every single device to the tire on which the device is mounted;
∞ for this purpose the receiver (B7) associates the codes received according to a pre-fixed sequence to the pre-established position of any single wheel and it identifies the loading sequence.

11. A system as in claim 1, wherein a signal sent during the first loading of each device, for example the signal of right functioning, indicates to the receiver (B7) the position of every single tire relating every single installed device;
∞ for this purpose, it is sufficient to follow a pre-established loading sequence in mounting the devices, the total number of which is equal to the number of wheels of the vehicle, eventually including the spare wheels;
∞ the first received code being associated to a first wheel; the second code to a second wheel, etc until the nth wheel, being n the total number of wheels to be controlled.

12. A system as in claim 1, wherein a sensor of the wheel movement is further provided in the device in order to save energy,
∞ said sensor operating to prevent the transmission of the signal of the proper functioning of the apparatus, sent at pre-established time periods, when the vehicle is stopped.

13. A system as in claim 1, wherein the device is fitted with an autonomous generator of electricity formed by a winding linked to a magnetic field.

14. A system as in claim 13, wherein the device is fitted with an autonomous generator of electricity formed by a winding linked to a magnetic field generated by a magnet fixed on the structure of the vehicle near the wheel.

15. A system as in claim 1, wherein the switch (42,B2) enables the circuit to transmit the signal when the group (26) commutes the switch (42,B2).

16. A system as in claim 1, wherein every single device uses an own identifying code for identifying the tire in failure and limiting the probability to receive signals from the devices out of the own vehicle.

17. A system as in claim 1, wherein the circuit is fitted with a receiving circuit for obtaining a bi-directional transmitting system capable of limiting the feeding of energy just when the vehicle is running.

## Patentansprüche

1. System zur Übertragung eines Signals, das den Betriebzustand eines Luftreifens anzeigt,
wobei das System zusammen mit einer Vorrichtung wirkt, die den aufblasenden Zustand des Luftreifens zeigt, und sich eine bewegliche Gruppe (26) in einer ersten Ladenstelle befindet, falls der Reifendruck höher ist, als ein vorbestimmter Wert,
auf dem Gegenteil, befindet sich die bewegliche Gruppe in einer zweiten Leerenposition, falls der Reifendruck niedriger ist, als der vorbestimmten Wert, daraus ist der Reifen nicht geeignet, in einem Standardgebrauch verwendet zu werden,
die bewegliche Gruppe (26) besteht mindestens aus einem Sensor, einem Verstärker, einem Signalumformer, und aus einem Auslöser,
wobei das System **dadurch gekennzeichnet ist, daß** ein Schalter (42, B2) ist vorgesehen, der von einer ersten bis zu einer zweiten Zustand austausche, wobei der erste Zustand gegenüber dem ersten Zustand ist, wenn die bewegliche Gruppe (26) von der ersten Ladenposition zur zweiten Leerenposition überschreitet um einen Apparat zu aktivieren, der ein Warnsignal sendet, das durch einen Empfänger (B7) aufgehoben wird,
außerdem, ist ein elektrischer dem Stromkreis vorgesehen, der einen Codeerzeuger (B3) und einen Oszillator (B4) umfasst, der zum Erzeugen der rechten Frequenz für das Übertragen des kodierten Signals fähig ist, wobei der Schalter (42, B2) ermöglicht dem Stromkreis das Signal zu übertragen, wenn der Schalter (42) ändert,
das System mit einem Filter (B5) zum filtern des Signals, mit einer Antenne (B6) zum senden des Signals, und mit einem einen Generator von elektrischer Energie (B1) zum Speisen von allen Apparaten des Stromkreises.

2. System nach Anspruch 1, **dadurch gekennzeichnet, daß** sich der Empfänger (B7) am Bord des Fahrzeuges befindet.

3. System nach Anspruch 1, **dadurch gekennzeichnet, daß** die signalisierende Vorrichtung mit einem zweiten Generator von elektrischer Energie ausgestattet ist, damit ein Warnsignal gesendet wird.

4. System nach Anspruch 1, **dadurch gekennzeichnet, daß** die signalisierende Vorrichtung einen dritten Generator von elektrischer Energie zum Durchführen der Verarbeitungsfunktionen innerhalb der Vorrichtung weiter enthält.

5. System nach Anspruch 1, **dadurch gekennzeichnet, daß** der Apparat, der ein Warnsignal sendet, das durch den Empfänger (B7) erhalten wird, ein Signal sendet, das den Aufladungszustand der elektrischen Generatore.

6. System nach Anspruch 1, **dadurch gekennzeichnet, daß** eine erste Verfahrenfunktion des Stromkreises aus der Sendung von Signalen an vorbestimmten Zeitabschnitten besteht, welche den richtige Betriebszustand anzeigt.

7. System nach Anspruch 1, **dadurch gekennzeichnet, daß** der Schalter (42,B2) dem Stromkreis ermöglicht, das Signal zu übertragen, wenn die Gruppe (26) den Schalter (42, B2) austauscht.

8. System nach Anspruch 7, **dadurch gekennzeichnet, daß** das Übertragen des Signals, das den richtige Betriebszustand des Stromkreises anzeigt, an vorbestimmten Zeitabschnitten stattfindet,
um Energie zu speichern, wird das Übertragen nicht ermöglicht, wenn die Gruppe (26) von der ersten Ladenposition zur zweiten Leerenposition überschreitet und den Schalter (42, B2) vom ersten bis zum zweiten Zustand austauscht, der gegenüber der ersten Zustand ist.

9. System nach Anspruch 1, **dadurch gekennzeichnet, daß** jeder einzelne Stromkreis einen kennzeichnenden Code verwendet, um den Gummireifen im Ausfall zu erkennen, und die Wahrscheinlichkeit zu begrenzen, Signale von den Vorrichtungen zu empfangen, die dem Fahrzeug nicht gehören.

10. System nach Anspruch 1, **dadurch gekennzeichnet, daß** das System den Empfänger (B7) enthält,
der Empfänger (B7) führt eine Selbstlernenfunktion durch, um jedes Einzelgeräte zum Gummireifen zu verbinden, an dem die Vorrichtung angebracht wird;
zu diesen Zweck verbindet der Empfänger (B7) die Codes empfängt nach einer vorbestimmten Reihenfolge in der vorbestimmten Position aller einzelnen Räder und identifiziert die Ladenreihenfolge.

11. System nach Anspruch 1, **dadurch gekennzeichnet, daß** ein Signal, das während des ersten Ladens jeder Vorrichtung, z.B. das Signal vom rechten Arbeiten gesendet wird; zeigt dem Empfänger (B7) die Position jedes einzelnen **Gummireifens an, der jede einzelne angebrachte Vorrichtung, bezieht,**
zu diesem Zweck ist es genügend, eine vorbestimmte Ladenreihenfolge zu folgen, wenn die Vorrichtungen montiert werden, wobei die Gesamtzahl der Vorrichtungen der Gesamtzahl der Rädern des Fahrzeuges gleich ist, einschließlich die Ersatzrad;
der erste empfangene Code ist mit einem ersten Rad verbunden; der zweite Code mit dem zweiten Rad, usw. bis zu dem n-te Rad, wobei n die Zahlgesamtmenge der zu steuernden Räder ist.

12. System nach Anspruch 1, **dadurch gekennzeichnet, daß** ein Sensor der Bewegung des Rades in der Vorrichtung weiter vorgesehen ist, um Energie zu speichern,
wobei der Sensor wirkt, um das Sendung des Signals des korrekten Werkens vom Apparat zu verhindern, wobei das Signal an vorbestimmten Zeitabschnitten gesendet wird, wenn das Fahrzeug gestoppt ist.

13. System nach Anspruch 1, **dadurch gekennzeichnet, daß** die Vorrichtung mit einem autonomen elektrischen Generator ausgestattet ist, wobei der Generator, der durch eine Wicklung gebildet ist, anschlossen an einem magnetischen Feld.

14. System nach Anspruch 1, **dadurch gekennzeichnet, daß** die Vorrichtung mit einem autonomen Generator von Elektrizität ausgestattet ist, der durch eine Wicklung gebildet ist, die an einem magnetischen Feld, wobei der magnetische Feld durch einem an der nahen dem Rad Struktur des Fahrzeuges angeschlossen ist.

15. System nach Anspruch 1, **dadurch gekennzeichnet, daß** der Schalter (42, B2) dem Stromkreis ermöglicht, das Signal zu übertragen, wenn die Gruppe (26) den Schalter (42, B2) austauscht.

16. System nach Anspruch 1, **dadurch gekennzeichnet, daß** jede einzelne Vorrichtung einen kennzeichnenden Code verwendet, um den Gummireifen im Ausfall zu erkennen, damit die Wahrscheinlichkeit des Empfangens von Signalen, die von Vorrichtungen anderen Fahrzeugen stammen, begrenzt wird.

17. System nach Anspruch 1, **dadurch gekennzeichnet, daß** der Kreis mit einem empfangenden Stromkreis zum Erhalten eines übertragenden Umkehrsystems ausgestattet ist, das zum Begrenzen der Energiespeisung fähig ist, gerade als der Fahrzeug läuft.

## Revendications

1. Système pour la transmission d'un signal indicatif de la condition de fonctionnement d'un pneumatique,
le système coopère avec dispositif qui signale la condition de gonflages du pneumatique, et un groupe mobile (26) se trouve dans une première position de chargement lorsque la pression du pneumatique est majeure d'une valeur pré-établie,
le groupe mobile (26) est, au contraire, dans une seconde position de déchargement lorsque la pression du pneumatique est inférieure de la valeur pré-établie et, par conséquent, le pneumatique n'est pas apte à un normal emploie,
le groupe mobile (26) consiste, au moins, d'un capteur, un amplificateur, un transducteur et un actionneur,
le système est **caractérisé en ce qu'**un interrupteur (42, B2) est prévu qui commute d'une première à une seconde condition, opposée à la première, lorsque le groupe mobile (26) passe de la première position de de chargement à la deuxième de déchargement pour activer un circuit qui envoie un signal d'attention à un récepteur (B7),
un circuit électrique est, en outre, prévu qui comprend un générateur de code (B3), un oscillateur (B4) capable de générer la correcte fréquence pour transmettre le signal codifié, un interrupteur (B2, 42) qui permet au circuit électrique de transmettre le signal lorsque interrupteur (B2,42) commute, un filtre (B5) pour filtrer le signal, une antenne (B6) pour transmettre le signal et un générateur d'énergie électrique (B1) qui alimente tous les composantes du circuit.

2. Système selon la revendication 1, **caractérisé en ce qu'**il récepteur (B7) se trouve à bord du véhicule.

3. Système selon la revendication 1, **caractérisé en ce que** le dispositif de signalisation est pourvu d'un second générateur d'énergie électrique pour envoyer un signal d'attention.

4. Système selon la revendication 1, **caractérisé en ce que** le dispositif de signalisation comprend, en outre, un troisième générateur d'énergie électrique pour réaliser les fonctions d'élaboration dans le dispositif.

5. Système selon la revendication 1, **caractérisé en ce que** l'appareil qui transmet un signal d'alarme capté du récepteur (B7) transmet un signal qui indique l'état de chargement des générateurs électriques.

6. Système selon la revendication 1, **caractérisé en ce qu'**une première fonction d'élaboration du circuit consiste en la transmission, à des périodes de temps pré-établie, de signaux qui indiquent le correct état de fonctionnement du circuit.

7. Système selon la revendication 1, **caractérisé en ce que** l'interrupteur (42, B2) permet au circuit de transmettre le signal lorsque le groupe (26) commute l'interrupteur (42, B2).

8. Système selon la revendication 7 **caractérisé en ce que** a transmission du signal qui indique le correct état de fonctionnement du circuit se produit à des pré-établies périodes de temps;
pour épargner de l'énergie, la transmission n'est pas permise lorsque le groupe (26) passe de la première position de déchargement à la seconde position de chargement et commute l'interrupteur (42, B2) de la première à la seconde condition, opposée à la première condition.

9. Système selon la revendication 1, **caractérisé en ce que** chaque circuit emploie son code d'identification pour identifier le pneumatique en avarie et limiter la probabilité de recevoir les signaux de dispositifs hors du véhicule.

10. Système selon la revendication 1, **caractérisé en ce que** le système comprend le récepteur (B7);
le récepteur (B7) réalise une fonction d'auto apprentissage pour associer chaque dispositif au pneumatique sur lequel le dispositif est monté; à cette raison le récepteur (B7) associe les codes reçus selon une séquence préfixée à la position pré-établie de toutes les roues et identifie la séquence de montage.

11. Système selon la revendication 1, **caractérisé en ce qu'**un signal envoyé pendant le premier montage de chaque dispositif, par exemple le signal de fonctionnement correct, indique au récepteur (B7) la position de chaque pneumatique relatif à chaque dispositif installé ;
pour cette raison, il est suffisant suivre une séquence de montage préfixée pendant le montage du dispositif, dont le nombre total est égal au nombre de roues du véhicule, éventuellement comprise la roue d'escorte ;
le premier code reçu est associé à la première roue; le second code à la seconde roue, etc. jusqu'à le énième roue, en étant n le nombre total de roues à contrôler.

12. Système selon la revendication 1, **caractérisé en ce qu'**un capteur du mouvement de la roue est, en outre, prévu dans le dispositif pour épargner de l'énergie,
le capteur agit pour empêcher la transmission du signal du correct fonctionnement du dispositif, envoyé à des pré-établis périodes de temps, lorsque le véhicule est arrêté.

13. Système selon la revendication 1, **caractérisé en ce que** le dispositif est pourvu d'un générateur autonome d'électricité formé d'un enroulement concaténé à un champ magnétique.

14. Système selon la revendication 1, **caractérisé en ce que** le dispositif est doué d'un générateur autonome d'électricité formé d'un enroulement concaténé à un champ magnétique engendré d'un aimant fixé à la structure du véhicule prochain à la roue.

15. Système selon la revendication 1, **caractérisé en ce que** l'interrupteur (42, B2) habilite le circuit à transmettre le signal lorsque le groupe (26) commute l'interrupteur (42, B2).

16. Système selon la revendication 1, **caractérisé en ce que** chaque dispositif emploie son code d'identification pour identifier le pneumatique en avarie et limiter la probabilité de recevoir des signaux de dispositifs hors du véhicule.

17. Système selon la revendication 1, **caractérisé en ce que** le circuit est pourvu d'un circuit récepteur pour obtenir un système de transmission bidirectionnel capable de limiter l'alimentation d'énergie à la période où le véhicule est en fonction.
